# EUROPÄISCHE PATENTANMELDUNG

(11) **EP 1 852 445 A1**
(43) Veröffentlichungstag der Anmeldung: **07.11.2007**
(21) Anmeldenummer: 07008187.2
(22) Anmeldetag: 23.04.2007
(51) Int. Cl.: C08F 6/10, B01D 1/00, C07K 14/62

(54) **Verfahren zum Entfernen von Lösungsmitteln aus Perlpolymerisaten**

(30) Priorität: 05.05.2006 DE 102006020874
(71) Anmelder: LANXESS Deutschland GmbH, 51369 Leverkusen (DE)
(72) Erfinder: Vanhorne, Pierre, Dr., 40789 Monheim (DE); Klipper, Reinhold, Dr., 50993 Monheim (DE); Wagner, Rudolf, Dr., 51061 Köln (DE); Podszun, Wolfgang, Dr., 80469 München (DE); Linn, Thomas, Dr., 41517 Grevenbroich (DE)

(57) **Zusammenfassung**

Verfahren zum Entfernen von organischen Lösungsmitteln aus Perlpolymerisaten, wobei die Perlpolymerisate einer Destillation des organischen Lösungsmittels unter Zusatz einer wasserlöslichen Carbonsäure unterzogen werden.

## Beschreibung

Die Erfindung betrifft ein Verfahren zum Entfernen von organischem Lösungsmittel aus Perlpolymerisaten, wobei die Perlpolymerisate einer Destillation des organischen Lösungsmittels unter Zusatz einer wasserlöslichen Carbonsäure unterzogen werden. Die Erfindung betrifft ferner Perlpolymerisate, die einen Gehalt an organischen Lösungsmitteln von weniger als 500 ppm aufweisen, sowie ihre Verwendung zur Herstellung von Ionenaustauschern. Ein weiterer Gegenstand der Erfindung ist die Verwendung von hydrophilen Carbonsäuren zum Entfernen von Lösungsmitteln aus Perlpolymerisaten.

Perlpolymerisate sind allgemein bekannt und werden beispielsweise zur Herstellung von Ionenaustauschern eingesetzt. Die Herstellung von Perlpolymerisaten ist ebenfalls bekannt und kann beispielsweise über Perlpolymerisation von vinylischen Monomeren erfolgen. Wird die Perlpolymerisation in Gegenwart organischer Lösungsmittel (Porogene) durchgefiihrt, erhält man sogenannte poröse Perlpolymerisate, die eine Porenstruktur aufweisen.

Wie dem Fachmann bekannt ist, kann die Porenstruktur durch die Variation von Vernetzergehalt, sowie durch Natur und Menge des Porogens kontrolliert werden. Als Porogene werden üblicherweise organische Lösungsmittel wie 4-Methyl-2-pentanol, Isobutanol, Methylisobutylketon, Toluol, Isooktan oder Isododekan eingesetzt, siehe z.B. US 4 382 124, US 3 586 646 und DE 1113570 B1.

Nach der Herstellung muss das Porogen in der Regel entfernt werden, um die Porenstruktur frei zu machen. In manchen Anwendungen, wie z. B. dem Einsatz der porösen Perlpolymerisate in der Lebensmittel- und in der Pharmaindustrie, darf der Restgehalt an Porogen aus toxikologischen Gründen sehr niedrige Höchstwerte, typischerweise einige ppm, nicht überschreiten.

Auch andere organische Lösungsmittel, wie z.B. Restmengen nicht umgesetzter Monomere und organischer Lösungsmittel, die während der Funktionalisierung von porösen und nicht porösen Perlpolymerisaten zu Ionenaustauschern, Trägerharzen und funktionellen. Adsorbern eingesetzt werden, müssen für die oben genannten Anwendungen nahezu vollständig entfernt werden.

Verschiedene Verfahren werden zur Entfernung von organischen Lösungsmitteln aus Perlpolymerisaten eingesetzt.

Bei der azeotropen Destillation wird das organische Lösungsmittel aus einer wässrigen Suspension der Perlpolymerisate durch einfaches Abdestillieren entfernt. Das Verfahren funktioniert nur dann, wenn das organische Lösungsmittel eine gewisse Wasserlöslichkeit besitzt und ermöglicht in der Regel nicht die. Einhaltung der für die oben genannten Anwendungen erforderlichen geringen Restwerte.

Alternativ kann das organische Lösungsmittel durch andere organische Lösungsmittel extrahiert werden. Ist das Extrahiermittel wasserunlöslich, muss es wiederum in einem zusätzlichen Schritt aus den Perlen entfernt werden. Ist es wasserlöslich, kann es durch Waschen der Perlen mit Wasser entfernt werden. Es entstehen aber hierbei große Mengen kontaminierter Abwässer, die entsorgt werden müssen und zu erhöhten Verfahrenkosten führen. Außerdem ist es auch in diesem Fall nicht gewährt, dass niedrige Restgehalte organischer Lösungsmittel erreicht werden können.

Organische Lösungsmittel können auch durch Dämpfung der Perlpolymerisate entfernt werden. Die Anwendung von Dampf ist allerdings technisch schwierig umzusetzen, da der Dampf in der Schüttung der Perlpolymerisate kondensiert, wodurch eine homogene Behandlung aller Perlen nur mit großem zeitlichen Aufwand zu gewährleisten ist. Außerdem kann bei porösen Perlpolymerisaten die Porenstruktur, der Perlen durch die intensive thermische Belastung kollabieren, wenn die Erweichungstemperatur des Polymernetzwerks überschritten wird.

Im Falle eines flüchtigen, niedrig siedenden organischen Lösungsmittels kann auch die Trocknung der Perlen zur Entfernung des organischen Lösungsmittels führen. Um niedrige Restgehalte organischer Lösungsmittel zu erreichen sind aber lange Trocknungszeiten notwendig und es werden große Volumina lösungsmittelhaltiger Abluft generiert, die gereinigt werden muss.

In der EP 1 350 809 A1 wird ein Verfahren beschrieben, in dem das organische Lösungsmittel durch Destillation unter Zusatz von wasserlöslichen organischen Lösungsmitteln (Ethylenglykolderivaten) entfernt wird. Nach diesem Verfahren muss die Destillationstemperatur allerdings zwingend oberhalb des Siedepunktes des zu entfernenden organischen Lösungsmittels liegen, was zu einem erhöhten Energieverbrauch führt und eine Beschädigung der Perlpolymerisate, insbesondere wenn sie funktionalisiert sind, nicht ausschließt.

Die Erreichung von Restgehalten unter 500 ppm organischer Lösungsmittel wird durch dieses Verfahren nicht sicher gestellt. Aufgabe der vorliegenden Erfindung ist also ein schonendes, kostengünstiges, umweltfreundliches Verfahren zum Entfernen organischer Lösungsmittel aus Perlpolymerisaten bereitzustellen.

Über das erfindungsgemäße Verfahren sollen Perlpolymerisate mit Gehalten an organischen Lösungsmitteln von weniger als 500 ppm erhalten werden können. Weitere erfindungsgemäße Aufgaben ergeben sich aus der Beschreibung und den Beispielen.

Diese Aufgabe wird gelöst durch ein Verfahren zum Entfernen von organischem Lösungsmittel aus Perlpolymerisaten, in dem die Perlpolymerisate einer Destillation des organischen Lösungsmittels unter Zusatz einer wasserlöslichen Carbonsäure unterzogen werden.

Gegenstand der Erfindung ist ferner ein Perlpolymerisat, das einen Gehalt an organischen Lösungsmitteln von weniger als 500 ppm aufweist. Ferner ist Gegenstand der Erfindung die Verwendung von Perlpolymerisaten, die einen Gehalt an organischen Lösungsmitteln von weniger als 500 ppm aufweisen zur Herstellung von Ionenaustauschern. Ein weiterer Gegenstand der Erfindung ist die Verwendung von hydrophilen Carbonsäuren zum Entfernen von organischen Lösungsmitteln aus Perlpolymerisasten.

Organische Lösungsmittel im Sinne der Erfindung können gesättigt, ungesättigt und/oder aromatisch sein und weisen 1 bis 30 Kohlenstoffatome, vorzugsweise 1 bis 20 Kohlenstoffatome, besonders bevorzugter Weise 1 bis 10 Kohlenstoffatome und gegebenenfalls ein oder mehrere Heteroatome auf.

Organische Lösungsmittel, die durch das Verfahren der vorliegenden Erfindung besonders wirkungsvoll entfernt werden können, sind bei 20°C zu weniger als 20 Gew.-%, bevorzugt weniger als 10 Gew.-% und insbesondere weniger als 5 Gew.-% in Wasser löslich. Gemäß einer besonders bevorzugten Ausführungsform der Erfindung, werden organische Lösungsmittel entfernt, die bei einer Temperatur zwischen 0°C und 100°C, bevorzugt zwischen 10 und 50°C, flüssig sind. Besonders vorteilhaft ist es, wenn die organischen Lösungsmittel einen Siedepunkt von weniger als 220°C, bevorzugt weniger als 180°C, besonders bevorzugt weniger als 150°C bei 1 bar aufweisen. Beispielhaft aber nicht erschöpfend seien genannt lineare und verzweigte Alkane enthaltend 5 bis 12 Kohlenstoffatome wie Isododekan, Isooktan, Oktan, Heptan, Hexan, Pentan; Cycloalkane mit 5 bis 12 Kohlenstoffatome wie Cyclohexan und Methylcyclohexan; aromatische Lösungsmittel wie Benzol, Toluol, Styrol, Methylstyrol, α-Methylstyrol, Ethylstyrol, Ethylbenzol, Chlorstyrol, Chlormethylstyrol, und Naphtalin; wasserunlösliche Alkohole mit 4 bis 15 Kohlenstoffatomen wie n-Butanol, 2-Ethyl-1-Hexanol und 4-Methyl-2-Pentanol; wasserunlösliche Ester wie Ethylacetat, n-Butylacetat, Methylacrylat, Methylmethacrylat, n-Butylacrylat, n-Butylmethacrylat, Dioctylphthalat und Dibutylphthalat; aliphatische Ether wie Diethylether und Dibutylether; wasserunlösliche Ketone wie Methylisobutylketon und Cyclohexanon; chlorierte Alkane wie Chloroform, Dichlormethan, 1,2-Dichlorethan und 1,2-Dichlorpropan; sowie flüchtige Silikone wie Hexamethyldisiloxan und Decamethyltetrasiloxan. Selbstverständlich können auch Gemische der vorgenannten Lösungsmittel durch das erfindungsgemäße Verfahren entfernt werden.

Struktur und Herstellung von Perlpolymerisaten sind dem Fachmann bekannt. Perlpolymerisate sind üblicherweise feste, runde Teilchen mit einem mittleren Durchmesser von 0,01 µm bis 2000 µm. Eine bevorzugte Herstellung umfasst den Einsatz eines oder mehrerer vinylischer Monomeren. Beispielhaft und nicht erschöpfend seien als vinylische Monomere genannt vinylaromatische Monomere wie Styrol, Methylstyrol, Ethylstyrol, Divinylbenzol, Trivinylbenzol, Vinylnaphthalin; Acryl-und Methacrylmonomere wie Methylacrylat, Ethylacrylat, n-Butylacrylat, t-Butylacrylat, 2-Ethylhexylacrylat, Ethylenglykoldiacrylat, Methylmethacrylat, Ethylmethacrylat, n-Butylmethacrylat, t-Butylmethacrylat, 2-Ethylhexylmethacrylat, 2-Hydroxyethylmethacrylat, Ethylenglycoldimethacrylat, Acrylsäure, Methacrylsäure, Acrylnitril und Methacrylnitril; Vinylether wie Ethylvinylether, Butylvinylether, Ethylenglykoldivinylether, Butandioldivinylether und Diethylenglykoldivinylether; Vinylester wie Vinylacetat und Vinylpropionat und Vinylsilane wie Trimethoxyvinylsilan und Triethoxyvinylsilan, oder Gemische der vorgenannten Verbindungen.

Besonders geeignet ist das erfindungsgemäße Verfahren zum Entfernen organischer Lösungsmittel aus porösen Perlpolymerisaten. Unter porösen Perlpolymerisaten werden in der vorliegenden Erfindung Perlpolymerisate verstanden, die ein Porenvolumen an Mikro-, Meso- und Makroporen von mindestens 0,1 cm³/g, vorzugsweise von mindestens 0,25 cm³/g ermittelt durch die für den Porentyp jeweils geeignete Messmethode (Stickstoffadsorptionsporosimetrie für Mikro- und Mesoporen, Quecksilberintrusionsporosimetrie für Meso- und Makroporen) aufweisen. Die Begriffe mikro-, meso- und makroporös sind in der Fachliteratur bereits eingehend beschrieben worden (siehe z.B. Seidl et al. Adv. Polym. Sci., Vol.5 (1967), S. 113 - 213).

Die Destillation des zu entfernenden organischen Lösungsmittels wird vorzugsweise in einer wässrigen Dispersion der Perlpolymerisate durchgeführt. Die Dispersion weist zweckmäßigerweise am Anfang des Destillationsprozesses einen Feststoffgehalt von 5 Gew.-% bis 50 Gew.-% auf, wobei abweichende Feststoffgehalte auch möglich sind. Vorteilhaft ist es, wenn die Dispersion rührbar bleibt.

Zur Homogenisierung der Dispersionstemperatur und des Destilliervorgangs kann die Dispersion während der Destillation gerührt werden. Die Rührerdrehzahl wird zweckmäßigerweise je nach Größe des Behälters und Beschaffenheit des Rührers so eingestellt, dass eine gute Durchmischung des Reaktorinhalts ohne mechanische Schädigung der Perlpolymerisate eintritt. Typisch sind Rührerdrehzahlen von 10 bis 250 UpM.

Gemäß einer bevorzugten Ausführungsform der Erfindung wird die Destillation bei 1 bar bei Siedetemperatur des vorhanden Gemischs aus wasserlöslicher Carbonsäure, zu entfernendem organischen Lösungsmittel und gegebenenfalls Wasser durchgeführt. Eine Besonderheit des Verfahrens aus der vorliegenden Erfindung besteht darin, dass die Siedetemperatur der bei der Destillation zugesetzten wasserlöslichen Carbonsäure keineswegs die Siedetemperatur des zu entfernenden Lösungsmittels überschreiten muss. So ist zum Beispiel die Entfernung von Toluol (Siedetemperatur 118°C bei 1 atm.) durch Destillation unter Zusatz von Ameisensäure (Siedetemperatur 102°C bei 1 bar) möglich.

Das erfindungsgemäße Verfahren ist aber keineswegs auf die Destillation bei 1 bar. Druck beschränkt. Bei Bedarf kann die Destillation unter reduziertem Druck auch bei niedrigeren Temperaturen durchgeführt werden, als es bei 1 bar der Fall wäre.

Als wasserlösliche Carbonsäuren werden in der vorliegenden Erfindung solche verstanden, die bei 20°C zu mindestens 5 Gew.-%, vorzugsweise zu mindestens 10 Gew.-%, besonders vorzugsweise zu mindestens 20 Gew.-% in Wasser löslich sind. Erfindungsgemäß besonders geeignete wasserlösliche Carbonsäuren sind solche, die bei 20°C und 1 bar flüssig sind. Gemäß einer bevorzugten Ausführungsform der Erfindung werden als wasserlösliche Carbonsäuren wasserlösliche Monocarboxylsäuren eingesetzt. Insbesondere geeignet sind Ameisensäure, Essigsäure, Propionsäure, Buttersäure und Isobuttersäure. Bevorzugt sind Ameisensäure, Essigsäure und Propionsäure, besonders bevorzugt ist Ameisensäure. Es können auch Gemische der vorgenannten Säuren eingesetzt werden.

Die wasserlöslichen Carbonsäuren werden vorzugsweise zu mindestens 5 Gew.-%, besonders bevorzugt zu mindestens 10 Gew.-%, und insbesondere zu mindestens 20 Gew.-% eingesetzt. Ferner werden sie vorzugsweise zu höchstens 90 Gew.-% und besonders bevorzugt zu höchstens 70 Gew.-%, jeweils bezogen auf die Gesamtmenge der wässrigen Phase, eingesetzt. Vorteilhafterweise liegt die Konzentration an wasserlöslicher Carbonsäure im Laufe der Destillation während mindestens 1h, bevorzugt mindestens 2h, besonders bevorzugt mindestens 4h in dem oben genannten Konzentrationsbereich vor.

Die Zugabe der wasserlöslichen Carbonsäure kann in einer oder mehreren Portionen erfolgen. Vorzugsweise erfolgt die Zugabe der wasserlöslichen Carbonsäure in einer Portion. Ein Teil oder die gesamte Menge wasserlöslicher Carbonsäure kann auch gleich am Anfang der Destillation vorgelegt werden. Die wasserlösliche Carbonsäure kann als reiner Stoff oder als wässrige Lösung zugegeben werden.

Am Ende des erfindungsgemäßen Destillationsvorgangs weisen die Perlpolymerisate vorzugsweise einen Restgehalt an organischem Lösungsmittel von weniger als 500 ppm, besonders bevorzugt weniger als 100 ppm, insbesondere weniger als 20 ppm und ganz besonders bevorzugt weniger als 5 ppm, jeweils bezogen auf das trockene Perlpolymerisat, auf.

Die durch das erfindungsgemäße Verfahren hergestellten Perlpolymerisate eignen sich hervorragend zum Einsatz als Adsorberharze in der Aufreinigung von Gasen und/oder Flüssigkeiten, insbesondere von Wasser und/oder wässrigen Lösungen. Die Adsorberharze entfernen z.B. selektiv bestimmte organische Verbindungen, wie beispielsweise chlorierte Lösungsmittel, aromatische Lösungsmittel, Phenole und/oder Geruchstoffe aus den genannten Gasen und/oder Flüssigkeiten.

Die erfindungsgemäßen Perlpolymerisate eignen sich ebenfalls hervorragend zum Einsatz als Trennmittel in der Chromatographie. Sie sind insbesondere gut geeignet, gegebenenfalls nach Funktionalisierung, zur Aufreinigung von Lösungen biologisch aktiver Verbindungen (Wirkstoffen), wie sie u.a. in der Biotechnologie aus speziell für diese Zwecke gezüchteten Mikroorganismen und/oder Zellkulturen gewonnen werden. Als Beispiele für solche biologisch aktiven Verbindungen seien nicht limitiertend genannt: Antibiotika wie z.B. Cyclosporine, Penicilline, Tetracycline, Glycopeptide, Makrolide, Polypeptide, Proteine wie Insulin, Erythropoetin oder der Gerinnungsfaktor VIII. Zur Aufreinigung von Lösungen von biologisch aktiven Verbindungen zählt auch die chromatographische Aufreinigung von Blut und/oder Blutplasma (so genannte Dialyse) durch selektive Adsorption z.B. von Cholesterin, Toxinen und/oder Immunkomplexen aus dem Blut.

Die durch das erfindungsgemäße Verfahren hergestellten Perlpolymerisate eignen sich auch hervorragend zur Herstellung von Ionenaustauschern. Zweckmäßigerweise werden sie durch die üblichen, dem Fachmann bekannnten Methoden der Funktionalisierung in Ionenaustauscher überführt.

Zur Herstellung starksaurer Kationenaustauscher werden die erfindungsgemäßen Perlpolymerisate vorzugsweise sulfoniert. Geeignete Sulfonierungsmittel sind in diesem Falle Schwefelsäure, Schwefeltrioxid und Chlorsulfonsäure. Bevorzugt wird Schwefelsäure mit einer Konzentration von 90 -100 %, besonders bevorzugt von 96 - 99 %. Die Temperatur bei der Sulfonierung liegt im allgemeinen bei 50 - 200°C, bevorzugt bei 90 - 130°C. Falls gewünscht kann bei der Sulfonierung ein Quellungsmittel, wie z.B. Chlorbenzol, Dichlorethan, Dichlorpropan oder Methylenchlorid angewendet werden. Nach der Sulfonierung wird das Reaktionsgemisch aus Sulfonierungsprodukt und Restsäure auf Raumtemperatur abgekühlt und zunächst mit Schwefelsäuren abnehmender Konzentrationen und dann mit Wasser verdünnt. Falls gewünscht kann der erfindungsgemäß erhaltene Kationenaustauscher in der H-Form zur Reinigung mit entionisiertem Wasser bei Temperaturen von 70 - 145°C, vorzugsweise von 105 - 130°C behandelt werden. Für viele Anwendungen ist es günstig, den Kationenaustauscher von der sauren Form in die Natrium-Form zu überführen. Diese Umladung erfolgt mit Natronlauge einer Konzentration von 10 - 60 %, vorzugsweise 40 -50 %. Die Temperatur bei der Umladung ist ebenfalls wichtig. Es hat sich gezeigt, dass bei Umladungstemperaturen von 60 - 120°C, vorzugsweise 75 - 100°C keine Defekte an den lonenaustauscherkugeln auftreten und die Reinheit besonders günstig ist.

Die erfindungsgemäßen Perlpolymerisate können auch für die Herstellung von Anionenaustauschern eingesetzt werden. Eine geeignete Methode ist in diesem Fall die Haloalkylierung des Perlpolymerisates mit anschließender Aminierung. Ein bevorzugtes Haloalkylierungsmittel ist Chlormethylmethylether. Aus den haloalkylierten Polymerisaten können durch Umsetzung mit einem sekundären Amin, wie Dimethylamin, schwach basische Anionenaustauscher erhalten werden. In entsprechender Weise liefert die Umsetzung der haloalkylierten Polymerisate mit tertiären Aminen, wie Trimethylamin, Dimethylisopropylamin oder Dimethylaminoethanol stark basische Anionenaustauscher.

Anionenaustauscher können auch nach dem sogenannten Phthalimid-Verfahren durch Amidoalkylierung des Perlpolymerisates hergestellt werden. Zur Herstellung des Amidomethylierungsreagenz wird beispielsweise Phthalimid oder ein Phthalimidderivat in einem Lösungsmittel gelöst und mit Formalin versetzt. Anschließend wird unter Wasserabspaltung hieraus ein Bis-(phthalimido)ether gebildet. Der Bis-(phthalimido)ether kann gegebenenfalls zum Phthalimidoester umgesetzt werden. Bevorzugte Phthalimidderivate im Sinne der vorliegenden Erfindung sind Phthalimid selbst oder substituierte Phthalimide, beispielsweise Methylphthalimid. Als Lösungsmittel kommen bei der Herstellung des Amidomethylierungsreagenz inerte Lösungsmittel zum Einsatz, die geeignet sind, das Polymer zu quellen, bevorzugt chlorierte Kohlenwasserstoffe, besonders bevorzugt Dichlorethan oder Methylenchlorid. Zur Funktionalisierung wird das vernetzte Perlpolymerisat mit dem Amidomethylierungsagenz umgesetzt. Als Katalysator wird hierbei Oleum, Schwefelsäure oder Schwefeltrioxid eingesetzt. Die Reaktionstemperatur beträgt dabei 20 bis 120°C, bevorzugt 50 bis 100°C. Die Abspaltung des Phthalsäurerestes und damit die Freilegung der Aminomethylgruppe erfolgt durch Behandeln des amidomethylierten vernetzten Perlpolymerisates mit wässrigen oder alkoholischen Lösungen eines Alkalihydroxids, wie Natriumhydroxid oder Kaliumhydroxid bei Temperaturen zwischen 100 und 250°C, vorzugsweise 120 - 190°C. Die Konzentration der Natronlauge liegt im Bereich von 10 bis 50 Gew.-%, vorzugsweise 20 bis 40 Gew.-%. Das erhaltene aminomethylierte Perlpolymerisat wird schließlich mit voll entsalztem Wasser alkalifrei gewaschen. In einem weiterem Verfahrensschritt wird das Aminomethylgruppen-haltige Perlpolymerisat durch Umsetzung mit Alkylierungsmitteln in Anionenaustauscher überführt. Bevorzugt erfolgt die Alkylierung nach der Leuckart-Wallach-Methode. Ein besonders gut geeignetes Leuckart-Wallach-Reagenz ist Formaldehyd in Kombination mit Ameisensäure als Reduktionsmittel. Die Alkylierungsreaktion wird bei Temperaturen von 20 bis 150°C, bevorzugt von 40 bis 110°C und Drücken von Normaldruck bis 6 bar durchgeführt. Anschließend an die Alkylierung kann der erhaltene schwach basische Anionenaustauscher ganz oder teilweise quaterniert werden. Die Quaternierung kann beispielsweise mit Methylchlorid erfolgen. Weitere Einzelheiten zur Herstellung von Anionenaustauschern nach dem Phthalimidverfahren werden beispielsweise in der EP-A 1 078 688 beschrieben.

Aus den erfindungsgemäßen Perlpolymerisaten können auch leicht Chelatharze hergestellt werden. So liefert die Umsetzung eines haloalkylierten Polymerisates mit Iminodiessigsäure Chelatharze vom Iminodiessigsäure-Typ.

Das erfindungsgemäße Verfahren wird im folgenden Teil anhand einiger Beispiele veranschaulicht. Diese Beispiele dienen nur als Anhaltspunkte und stellen keineswegs eine Einschränkung des oben beschriebenen erfindungsgemäßen Verfahrens dar.

### Beispiele:

### Beispiel 1: Entfernung von Toluol durch einfache Destillation (nicht erfindungsgemäß).

Mit Porogen getränktes Perlpolymerisat wird durch Suspensionspolymerisation eines Gemisches aus Divinylbenzol (473 g, technische Qualität, 80 %ig), Toluol (720 g) und t-Butylperoxo-2-ethylhexanoat (2,8 g) hergestellt.

480 g der erhaltenen Perlpolymerisate wurden mit 1500 ml Wasser in einem 4-Liter Rührreaktor, augestattet mit Thermostat, Rührer und Destillationsbrücke, vorgelegt und es wurde solange destilliert, bis die Siedetemperatur im Reaktor 100°C erreichte und nur noch Wasser abdestillierte. Man erhielt als Destillat ein zweiphasiges Gemisch aus 280 ml Toluol und 760 ml Wasser.

Es wurden 10 ml Perlpolymerisate entnommen und mit Wasser gewaschen. Der Toluol-Restgehalt, bestimmt durch Gaschromatographie, betrug 9800 ppm (0,98 %).

### Beispiel 2: Entfernung von Toluol mit Zusatz von Ameisensäure (erfindungsgemäß).

Zu den restlichen Perlpolymerisaten aus Beispiel 1 wurden 500 ml Ameisensäure (85 %ig in Wasser) zugegeben und es wurde weiter destilliert, bis die Destillatmenge in diesem Schritt 750 ml erreichte. Die Temperatur im Reaktor stieg bis 104°C an.

Es wurden 10 ml Perlpolymerisate entnommen und mit Wasser gewaschen. Der Restgehalt an Toluol in den Perlpolymerisaten, bestimmt durch Gaschromatographie, betrug 200 ppm.

Den restlichen Perlpolymerisaten wurden 300 ml Wasser und erneut 500 ml Ameisensäure (85 %ig in Wasser) zugesetzt und es wurden erneut 750 ml Flüssigkeit destilliert.

Die Flüssigkeit im Reaktor wurde abgesaugt, durch 1500 ml Wasser ersetzt und nochmals abgesaugt. Die Perlen wurden nochmals 2 h bei 80°C mit 1500 ml Wasser und 45 g Natriumhydroxid verrührt und anschließend auf einer Nutsche solange mit Wasser gewaschen, bis der Ablauf einen pH-Wert < 8 aufwies.

Der Restgehalt an Toluol in den Perlpolymerisaten, ermittelt durch Gaschromatographie, war kleiner als 15 ppm. Der Restgehalt an Natriumformiat, bestimmt durch Ionenaustauscherchromatographie, war kleiner als 5 ppm.

### Beispiel 3: Entfernung von Toluol mit Zusatz von Ameisensäure (erfindungsgemäß).

Mit Porogen getränkte Perlpolymerisate wurden durch Suspensionspolymerisation eines Gemisches aus Divinylbenzol (256 kg, technische Qualität, 80%ig), Toluol (384 kg) und t-Butylperoxo-2-ethylhexanoat (1,54 kg) hergestellt.

200 Liter der erhaltenen Perlpolymerisate wurden zusammen mit 550 Litern Ameisensäure (32 %ig in Wasser) in einem 1000-Liter Reaktor aus HC-Stahl, ausgestattet mit Mantelheizung und Destillationskolonne, vorgelegt. Es wurde dann solange destilliert, bis 67 kg Toluol und 400 Liter wässriger Phase kondensiert worden waren. Die Temperatur im Reaktor stieg bis 106°C an.

Es wurden 500 ml Perlpolymerisate entnommen und mit Wasser gewaschen. Der Restgehalt an Toluol in den Perlpolymerisaten, bestimmt durch Gaschromatographie, betrug 930 ppm.

Zum Reaktorinhalt wurden 25 kg Ameisensäure (98-100 %ig) und 25 Liter Wasser zugesetzt und es wurden weitere 50 Liter Destillat abgenommen. Danach wurden 200 Liter Wasser zugesetzt und nochmals 200 Liter Destillat abgenommen.

Der Reaktorinhalt wurde auf eine Nutsche überführt und die Perlpolymerisate wurden auf der Nutsche 2 Mal mit 187 Litern Wasser, 134 Litern Natronlauge (4 gew.-%ig) und 4 Mal mit 200 Litern Wasser gewaschen.

Der Restgehalt an Toluol in den Perlpolymerisaten, bestimmt durch Gaschromatographie, betrug 190 ppm.

### Beispiel 4: Entfernung von MIBK durch einfache Destillation (nicht erfindungsgemäß).

Mit Porogen getränkte Perlpolymerisate wurden durch Suspensionspolymerisation eines Gemisches aus Divinylbenzol (240 g, technische Qualität, 80%ig), Styrol (80 g Methylisobutylketon (MIBK, 480 g) und Dibenzoylperoxid (3;2 g, 75 %ig) hergestellt.

624 g der erhaltenen Perlpolymerisate wurden mit 1500 ml Wasser in einem 4-Liter Rührreaktor, augestattet mit Thermostat, Rührer und Destillationsbrücke, vorgelegt und es wurde solange destilliert, bis die Siedetemperatur im Reaktor 100°C erreichte und nur noch Wasser abdestillierte.

Es wurden 10 ml Perlpolymerisate entnommen und mit Wasser gewaschen. Der Restgehalt an MIBK, bestimmt durch Gaschromatographie, betrug 2 % (2000 ppm).

### Beispiel 5: Entfernung von MIBK mit Zusatz von Ameisensäure (erfindungsgemäß).

Zu den restlichen Perlpolymerisaten aus Beispiel 1 wurden 500 ml Ameisensäure (85 %ig in Wasser) zugegeben und es wurde weiter destilliert, bis die Destillatmenge in diesem Schritt 750 ml erreichte. Die Temperatur im Reaktor stieg bis 104°C an.

Es wurden 10 ml Perlpolymerisate entnommen und mit Wasser gewaschen. Der Restgehalt an Methylisobutylketon (MIBK) in den Perlpolymerisaten, bestimmt durch Gaschromatographie, betrug 75 ppm.

Den restlichen Perlpolymerisaten wurden 300 ml Wasser und erneut 500 ml Ameisensäure (85 %ig in Wasser) zugesetzt und es wurden erneut 750 ml Flüssigkeit destilliert.

Die Flüssigkeit im Reaktor wurde abgesaugt, durch 1500 ml Wasser ersetzt und nochmals abgesaugt. Die Perlen wurden nochmals 2 h bei 80°C mit 1500 ml Wasser und 45 g Natriumhydroxid verrührt und anschließend auf einer Nutsche solange mit Wasser gewaschen, bis der Ablauf einen pH-Wert < 8 aufwies.

Der Restgehalt an MIBK in den Perlpolymerisaten, ermittelt durch Gaschromatographie, war kleiner als 15 ppm. Der Restgehalt an Natriumformiat, bestimmt durch Ionenaustauscherchromatographie, war 7 ppm.

### Beispiel 6: Entfernung von DCE mit Zusatz von Ameisensäure (erfindungsgemäß).

Es wurden aus 725,6 g monodispersem, unvernetzen Polystyrolsaatpolymerisat (mittlerer Perlendurchmesser 18 µm), 5442 g Divinylbenzol, 544 g Toluol und 181 g t-Butylperoxo-2-ethylhexanoat monodisperse, poröse Perlpolymerisate mit einem mittlerem Perlendurchmesser von 33 µm gemäß WO 2005/075530 hergestellt.

Die Perlpolymerisate wurden abgetrennt und 24 h bei 80°C in Vakuum getrocknet.

150 g der getrockneten Perlpolymerisate wurden in einem 4-Liter Reaktor, ausgestattet mit Rührer, Thermostat und Destillationsbrücke, 3 Mal mit 1500 ml 1,2-Dichlorethan (DCE) extrahiert, um das lösliche Polysytrol stammend aus dem Saatpolymerisat zu entfernen.

Am Ende des dritten Extraktionsvorgangs wurde das DCE abgesaugt (Die Perlpolymerisate schwimmen aufgrund ihrer geringerer Dichte auf) und es wurden 1500 ml Wasser und 500 ml Ameisensäure (85 %ig in Wasser) zugegeben. Es wurde solange destilliert, bis 140 ml DCE und 1100 ml wässrige Phase kondensiert wurden.

Der Restgehalt an 1,2-Dichlorethan in den Perlpolymerisaten, ermittelt durch Gaschromatographie, war kleiner als 20 ppm.

Vergleichbare Ergebnisse erhält man auch beim Einsatz der in der Beschreibung alternativ genannten wasserlöslichen Carbonsäuren.

### Beispiel 7: Entfernung von Isododekan mit Zusatz von Propionsäure (erfindungsgemäß)

Mit Porogen getränkte Perlpolymerisate wurden durch Suspensionspolymerisation eines Gemisches aus Styrol (872,2 g), Divinylbenzol (65,1 g, technische Qualität, 80 %ig), Isododekan (technische Qualität, 591 g) undt-Butylperoxo-2-ethylhexanoat (5,73 g) hergestellt.

750 g der erhaltenen Perlpolymerisate wurden mit 1500 ml Propionsäure (78 %ig in Wasser) in einem 4-Liter Rührreaktor, ausgestattet mit Thermostat, Rührer und Destillationsbrücke, vorgelegt und es wurde solange destilliert, bis nur noch Wasser und kein Isododekan mehr abdestillierte.

Es wurden dann 500 ml Propionsäure (78 %ig in Wasser) zugegeben und es wurde weiter destilliert, bis die Destillatmenge in diesem Schritt 500 ml erreichte.

Es wurden 10 ml Perlpolymerisate entnommen und mit Wasser gewaschen. Der Restgehalt an Isododekan in den Perlpolymerisaten, bestimmt durch Gaschromatographie, betrug 200 ppm. Den restlichen Perlpolymerisaten wurden erneut 500 ml Propionsäure (78 %ig in Wasser) zugegeben und es wurden erneut 500 ml Flüssigkeit destilliert.

Aus diesen wurden 10 ml Perlpolymerisate entnommen und mit Wasser gewaschen. Der Restgehalt an Isododekan in den Perlpolymerisaten, bestimmt durch Gaschromatographie, betrug 75 ppm. Den restlichen Perlpolymerisaten wurden erneut 500 ml Propionsäure (78 %ig in Wasser) zugegeben und es wurden erneut 500 ml Flüssigkeit destilliert.

Die Flüssigkeit im Reaktor wurde abgesaugt, durch 1500 ml Wasser ersetzt und nochmals abgesaugt. Die Perlen wurden nochmals 2 h bei 80°C mit 1500 ml Wasser und 45 g Natriumhydroxid verrührt und anschließend auf einer Nutsche solange mit Wasser gewaschen, bis der Ablauf einen pH-Wert < 8 aufwies.

Der Restgehalt an Isododekan in den Perlpolymerisaten, ermittelt durch Gaschromatographie, war kleiner als 20 ppm.

## Patentansprüche

1. Perlpolymerisate, **dadurch gekennzeichnet, dass** sie einen Restgehalt an organischen Lösungsmitteln von weniger als 500 ppm aufweisen.

2. Verfahren zur Entfernung von organischen Lösungsmitteln aus Perlpolymerisaten, **dadurch gekennzeichnet, dass** die Perlpolymerisate einer Destillation des organischen Lösungsmittels unter Zusatz einer wasserlöslichen Carbonsäure unterzogen werden.

3. Verfahren nach Anspruch 2, **dadurch gekennzeichnet, dass** im Laufe der Destillation die Konzentration der wasserlöslichen Carbonsäure in der wässrigen Phase so eingestellt wird, dass sie 10 Gew.-% überschreitet.

4. Verfahren nach einem der Ansprüche 2 oder 3, **dadurch gekennzeichnet, dass** die, wasserlösliche Carbonsäure in einer einzigen Portion im Laufe der Destillation zugegeben wird.

5. Verfahren nach einem der Ansprüche 2 bis 4, **dadurch gekennzeichnet, dass** zumindest ein Teil der wasserlöslichen Carbonsäure gleich am Anfang der Destillation vorgelegt wird.

6. Verfahren nach einem der Ansprüche 2 bis 5, **dadurch gekennzeichnet, dass** als wasserlösliche Carbonsäure Ameisensäure, Essigsäure, Propionsäure, Buttersäure, Isobuttersäure oder Gemische hiervon, eingesetzt werden.

7. Verfahren nach einem der Ansprüche 2 bis 6, **dadurch gekennzeichnet, dass** die Perlpolymerisate in einer wässrigen Dispersion der Destillation unterzogen werden.

8. Verfahren nach einem der Ansprüche 2 bis 7, **dadurch gekennzeichnet, dass** als wasserlösliche Carbonsäure eine bei 20°C und 1 atm flüssige Monocarbonsäure eingesetzt wird.

9. Verwendung von Perlpolymerisaten nach Anspruch 1 zur Herstellung von Ionenaustauschern oder Adsorberharzen.

10. Verwendung von hydrophilen Carbonsäuren zum Entfernen von hydrophoben Lösungsmitteln aus Perlpolymerisaten.

11. Verwendung von Perlpolymerisaten nach Anspruch 1 zur Aufreinigung von Lösungen biologisch aktiver Verbindungen.

12. Verwendung von Perlpolymerisaten nach Anspruch 1 zur Aufreinigung von Insulinlösungen.
